# FASCICULE DE BREVET EUROPEEN

(11) **EP 0 933 294 B1**
(45) Date de publication et mention de la délivrance du brevet: **30.07.2003**
(21) Numéro de dépôt: 99400017.2
(22) Date de dépôt: 06.01.1999
(51) Int. Cl.: B64D 45/00, B64D 31/00

(54) **Systéme de commande de moteur pour aéronef**
Flugzeugmotor-Steuerungssystem
Aircraft engine control system

(30) Priorité: 30.01.1998 FR 9801056
(43) Date de publication de la demande: 04.08.1999
(73) Titulaire: AIRBUS FRANCE, 31060 Toulouse (FR)
(72) Inventeur: Zaccaria, Patrick, 31100 Toulouse (FR); Ostermann, Patrice, 31700 Blagnac (FR)
(74) Mandataire: Bonnetat, Christian

(56) Documents cités:
- EP-A- 0 807 897
- US-A- 5 270 931

## Description

La présente invention concerne un système de commande de moteur pour aéronef.

On sait que, de nos jours, les constructeurs aéronautiques proposent de plus en plus des familles d'aéronefs, plus spécifiquement des avions, se différenciant essentiellement par des capacités d'emport et des rayons d'action différents.

Les aéronefs d'une même famille sont généralement équipés des mêmes moteurs, mais régis par des lois de gestion de la poussée différentes. Schématiquement, une loi de gestion de la poussée présente, comme caractéristique principale, la poussée maximale demandée au moteur. Un avion plus léger, qu'un avion de référence, sera équipé d'un moteur (ou de plusieurs moteurs) utilisant une loi de gestion de la poussée permettant d'obtenir moins de poussée, mais économiquement plus intéressante.

Chaque type d'avion doit être certifié (c'est-à-dire qu'il doit recevoir les autorisations légales nécessaires à son exploitation) pour un type de moteur ayant sa loi de gestion de la poussée.

Lorsque l'on veut réaliser une version nouvelle d'un avion d'une même famille, c'est-à-dire un avion sensiblement identique à un avion déjà existant, mais présentant une augmentation de masse (dans des limites définies), le choix de la loi de gestion de la poussée constitue donc un des problèmes à résoudre.

Deux solutions apparaissent à l'évidence : étude et développement d'une nouvelle loi de gestion de la poussée, ou, le cas échéant, utilisation de la loi de gestion de la poussée de l'avion de masse immédiatement supérieure dans la famille d'aéronefs en question.

Toutefois, chacune de ces deux solutions exige de refaire l'ensemble des procédures de certification pour le nouvel avion et, cela, pour tout le domaine de vol, nécessitant en particulier des campagnes d'essais en vol très onéreuses.

La présente invention a pour but d'éviter cet inconvénient.

A cet effet, le système de commande de moteur pour un premier aéronef appartenant à une famille d'aéronefs comportant de plus au moins un second aéronef, ledit premier aéronef présentant une masse maximale supérieure, dans une limite prédéterminée, à celle dudit second aéronef ayant, pour chaque moteur, une loi de gestion de la poussée, est remarquable, selon l'invention, en ce qu'il est prévu, pour chaque moteur dudit premier aéronef, une première loi de gestion de la poussée dudit moteur spécifique audit premier aéronef pendant la phase de décollage, et une seconde loi de gestion de la poussée dudit moteur correspondant à la partie de ladite loi de gestion de la poussée applicable pour ledit second aéronef pendant toutes les autres phases de vol, des moyens de détection du passage d'une phase de vol à une autre étant prévus pour fournir, audit moteur, au moins un signal de commande correspondant à l'une ou l'autre desdites première et seconde lois.

Ainsi, les procédures de certification pourront être réduites à la phase de décollage, puisque, pour toutes les autres phases de vol, l'aéronef (désigné par "premier aéronef" ci-dessus) présentera le même "comportement" que celui désigné par "second aéronef", cela entraînant des économies de temps et de coût correspondantes.

Avantageusement, ledit système utilise des signaux, disponibles sur ledit premier aéronef, traités soit de façon informatique, soit de façon électronique.

De préférence, il fournit un signal "décollage" et un signal "non-décollage", chaque signal étant élaboré à partir de deux logiques et de paramètres différents.

Avantageusement, la sélection de la poussée au décollage par le circuit logique aura lieu quand :
- la mise en puissance du calculateur FADEC est effectuée,
   OU (porte logique)
- l'inverseur de poussée a été déployé ET (porte logique) la position de la manette des gaz est inférieure à une valeur donnée, valeur qui indique que l'inverseur de poussée est sélectionné,
   OU
- le statut "sol" est maintenu pendant un temps déterminé.

De plus, la fin de la phase de décollage est déterminée par le fait que :
- le moteur est réglé à la poussée de décollage maximale pendant un temps déterminé,
   OU
- le nombre de Mach Mn > 0,35,
   ET la manette de gaz est ramenée en arrière.

Par ailleurs, la valeur "sol", utilisée dans la logique de sélection de la poussée au décollage, est sélectionnée lorsqu'au moins deux sources, parmi les quatre sources disponibles suivantes, satisfont aux critères souhaités, lesdites sources étant :
- ADC1 Mn (< 0,1 en référence à la stratégie de sélection),
- ADC2 Mn (< 0,1 en référence à la stratégie de sélection) ,
- FADEC Mn (< 0,15 calculé par ses propres sondes) ET (porte logique) FADEC Mn est valide,
- LGCIU = sol ET (porte logique) LGCIU est valide,
où ADC désigne généralement la centrale anémométrique, FADEC un calculateur de contrôle du moteur, et LGCIU l'unité d'interface de commande du train d'atterrissage.

En outre, après l'achèvement de la phase de décollage, la sélection de la poussée d'une autre phase de vol est basée sur le fait que :
- le moteur a fonctionné à la poussée de décollage pendant un temps déterminé,
   OU
- le nombre de Mach sélectionné est supérieur à 0,35
   ET
- la manette de gaz est ramenée en arrière [et le mode dit FLEX (correspondant au fait que, pour certaines températures, on alimente le FADEC avec des paramètres de température différente de la température réelle) est désélectionné] pendant un temps déterminé.

Dans ce dernier cas, le circuit logique comporte :
- une entrée TLA = MCT, MCT représentant le régime maximal en continu,
- une entrée mode dit FLEX
reliées à une porte logique ET, dont la sortie est reliée à une porte logique OU, recevant, à son autre entrée, le signal TLA = MCT, et la sortie de la porte logique OU est reliée à une porte logique ET dont l'autre entrée reçoit le signal correspondant au régime du moteur, et, après confirmation que le moteur a fonctionné à la poussée de décollage pendant un temps déterminé, le signal correspondant est fourni à une porte logique OU, recevant, à son autre entrée, le signal du statut "vol", la sortie de la porte logique étant reliée à un premier calculateur, et une porte logique ET reçoit, comme entrées, TLA ≤ MCT et mode dit FLEX, et sa sortie est reliée à une porte logique ET, après confirmation pendant un temps déterminé, dont l'autre entrée reçoit le signal de sortie du premier calculateur, ce dernier recevant, comme seconde entrée, le signal de sortie correspondant à la sélection de la poussée au décollage, fourni également à un second calculateur, comme première entrée, et dont la seconde entrée est reliée à la sortie de la porte logique, la sortie du second calculateur correspondant au choix de la poussée d'une phase de vol différente de la phase de décollage.

En particulier, la valeur "vol" est sélectionnée lorsqu'au moins deux sources, parmi les trois sources disponibles suivantes, satisfont aux critères souhaités, lesdites sources étant :
- ADC1 Mn (> 0,35),
- ADC2 Mn (> 0,35),
- FADEC Mn (> 0,35) ET (porte logique) FADEC Mn est valide.

Les figures du dessin annexé feront bien comprendre comment l'invention peut être réalisée. Sur ces figures, des références identiques désignent des éléments semblables.

La figure 1 illustre un premier exemple de principe de différentiation entre deux phases de vol d'un aéronef selon l'invention.

La figure 2, semblable à la figure 1, illustre un second exemple de principe de différentiation entre deux phases de vol d'un aéronef selon l'invention.

La figure 3 est un circuit logique illustrant le principe de la sélection de la poussée au décollage, dans le cadre de l'invention.

La figure 4 est un circuit logique faisant partie et précisant celui de la figure 3.

La figure 5 est un circuit logique illustrant le principe de la sélection de la poussée de remise des gaz, dans le cadre de l'invention.

La figure 6 est un circuit logique faisant partie et précisant celui de la figure 5.

Comme déjà indiqué, le système de commande de moteur pour un premier aéronef 1 appartenant à une famille d'aéronefs comportant de plus au moins un second aéronef, ledit premier aéronef présentant une masse maximale supérieure, dans une limite prédéterminée, à celle dudit second aéronef ayant, pour chaque moteur, une loi de gestion de la poussée, prévoit, généralement, pour chaque moteur dudit premier aéronef, une première loi de gestion de la poussée dudit moteur spécifique audit premier aéronef 1 pendant la phase de décollage T, et une seconde loi de gestion de la poussée dudit moteur correspondant à la partie de ladite loi de gestion de la poussée applicable pour ledit second aéronef pendant toutes les autres phases de vol R, des moyens de détection 2, 22 du passage d'une phase de vol à une autre étant prévus pour fournir, audit moteur, au moins un signal de commande correspondant à l'une ou l'autre desdites première et seconde lois.

En outre, le système utilise des signaux disponibles sur l'aéronef et traités soit de façon informatique (algorithmes), soit de façon électronique (portes logiques, bascules, entre autres).

Par ailleurs, pour des raisons de fiabilité, le système fournit un signal "décollage" et un signal "non-décollage", chaque signal étant élaboré à partir de deux logiques et de paramètres différents. On notera, à cet égard, que toute apparition simultanée des deux signaux ne pourrait être due qu'à au moins une double panne du système.

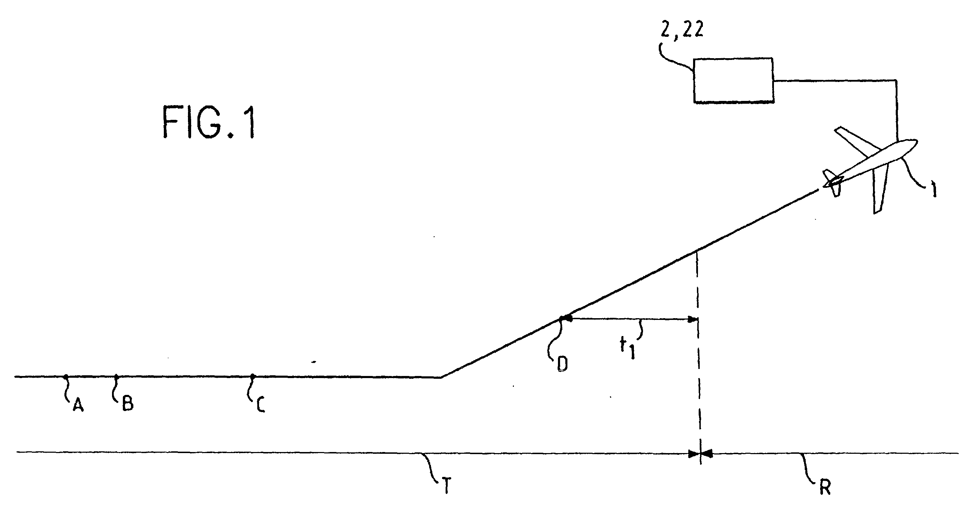

La figure 1, illustrant un premier exemple de principe de différentiation entre deux phases de vol d'un aéronef (décollage T et remise de gaz R), indique un certain nombre de points représentatifs de la différentiation phase de décollage T/autre phase (remise de gaz) R :
- A : début de la séquence de démarrage des moteurs (mise en puissance du calculateur FADEC),
- B : démarrage des moteurs,
- C : manette des gaz en position de décollage,
- D : TLA ≤ MCT et pas de mode FLEX pendant un temps t1 déterminé (par exemple égal à 20 secondes) (TLA = Throttle Lever Angle et MCT = Max Continuous, le mode dit FLEX correspondant au fait que, pour certaines températures, le FADEC est alimenté avec des paramètres de température différente de la température réelle).

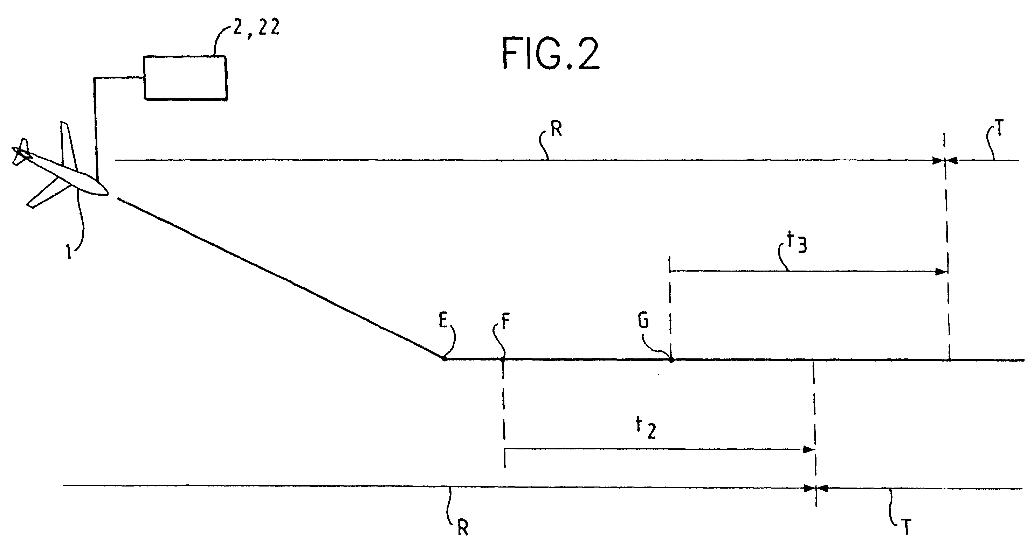

La figure 2, illustrant un second exemple de principe de différentiation entre deux phases de vol (R et T) d'un aéronef selon l'invention, indique un certain nombre de points représentatifs de celle-ci :
- E : sol (LGCIU = Landing Gear Control Interface Unit, soit l'unité d'interface de commande du train d'atterrissage),
- F : Mn (nombre de Mach) = 0,15 (FADEC) pendant un temps t2 déterminé, par exemple 30 secondes pour passer de la phase R à la phase T (décollage) (bas de la figure 2) dans le cas où LGCIU et Mn FADEC sont disponibles, mais T/R (Thrust Reverser = inverseur de poussée) est inopérant,
- G : Mn = 0,1 pendant un temps t3 déterminé, par exemple 30 secondes, pour passer de la phase R à la phase T (décollage) (haut de la figure 2) dans le cas où LGCIU et Mn FADEC ne sont pas disponibles et T/R est inopérant.

On notera que, dans le cas nominal, la poussée au décollage sera sélectionnée quand l'inverseur de poussée est sélectionné et totalement déployé.

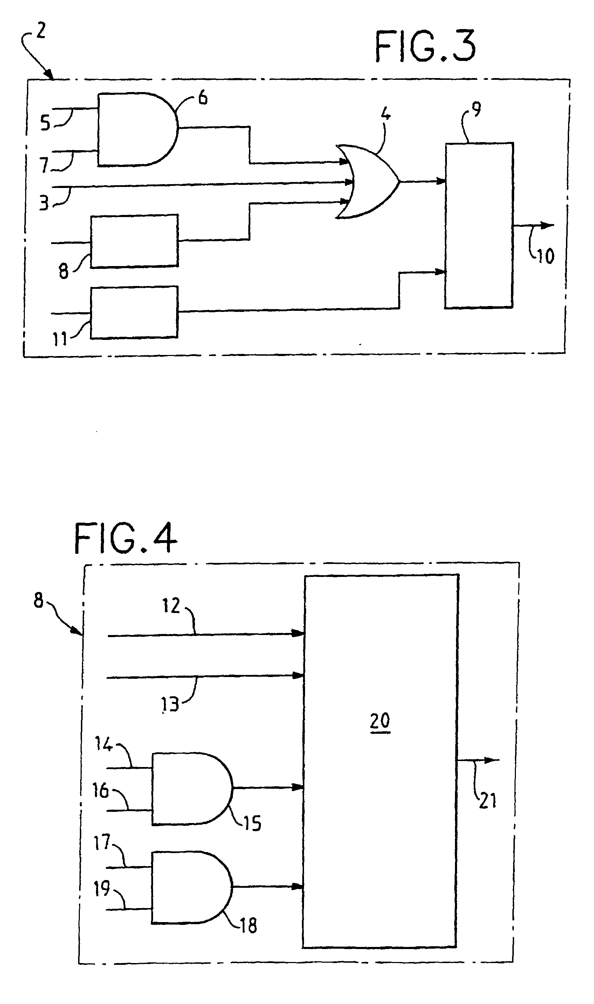

La sélection de la poussée au décollage illustrée par le circuit logique 2 de la figure 3 aura lieu quand :
- la mise en puissance 3 du calculateur FADEC (dans lequel sont implantées les lois de gestion de la poussée) est effectuée,
   OU (porte logique 4)
- l'inverseur de poussée a été déployé 5 ET (porte logique 6) la position de la manette des gaz (TLA = Throttle Lever Angle) 7 est inférieure à une valeur donnée, par exemple inférieure ou égale à 4,3°,
   OU
- le statut "sol" 8 [basé sur l'unité d'interface de commande du train d'atterrissage (LGCIU = Landing Gear Control Interface Unit) et le nombre de Mach (Mn)] est maintenu pendant plus de 30 secondes, par exemple.

En regard de la figure 3, on notera que la sortie de la porte logique 4 est reliée à un calculateur 9, fournissant à sa sortie 10, le signal de sélection de la poussée au décollage, et recevant, par ailleurs, de 11 le signal correspondant à une autre phase de vol (notamment, remise de gaz).

Cette logique permet de choisir le "décollage" :
- après l'atterrissage,
- après un "décollage" rejeté si la "remise de gaz" était sélectionnée,
- après une panne de moteur ou avant un démarrage de moteur.

La fin de la phase de décollage sera déterminée par le fait que :
- le moteur est réglé à la poussée de décollage maximale pendant 20 secondes (par exemple),
   OU
- Mn > 0,35
   ET la manette de gaz est ramenée en arrière, avec confirmation pendant 20 secondes que la position de la manette de gaz est inférieure ou égal au régime moteur utilisé quand l'autre est en panne (MCT = Max Continuons) .

A ce moment, la poussée de remise de gaz sera sélectionnée.

Concernant la détermination "sol" (figure 4) pour la sélection de la poussée au décollage, quatre sources sont disponibles :
- ADC1 Mn (< 0,1 en référence à la stratégie de sélection) 12,
- ADC2 Mn (< 0,1 en référence à la stratégie de sélection) 13,
- FADEC Mn (< 0,15 calculé par ses propres sondes) 14 ET (porte logique 15) FADEC Mn est valide (16),
- LGCIU = sol (17) ET (porte logique 18) LGCIU est valide (19).
[ADC (Air Data Computer) désigne généralement la centrale anémométrique qui fournit, notamment, la pression, la température et le nombre de Mach].

Au moins deux sources reliées au calculateur 20 doivent satisfaire aux critères souhaités de façon à sélectionner la valeur "sol" (21) utilisée dans la logique de sélection de la poussée au décollage.

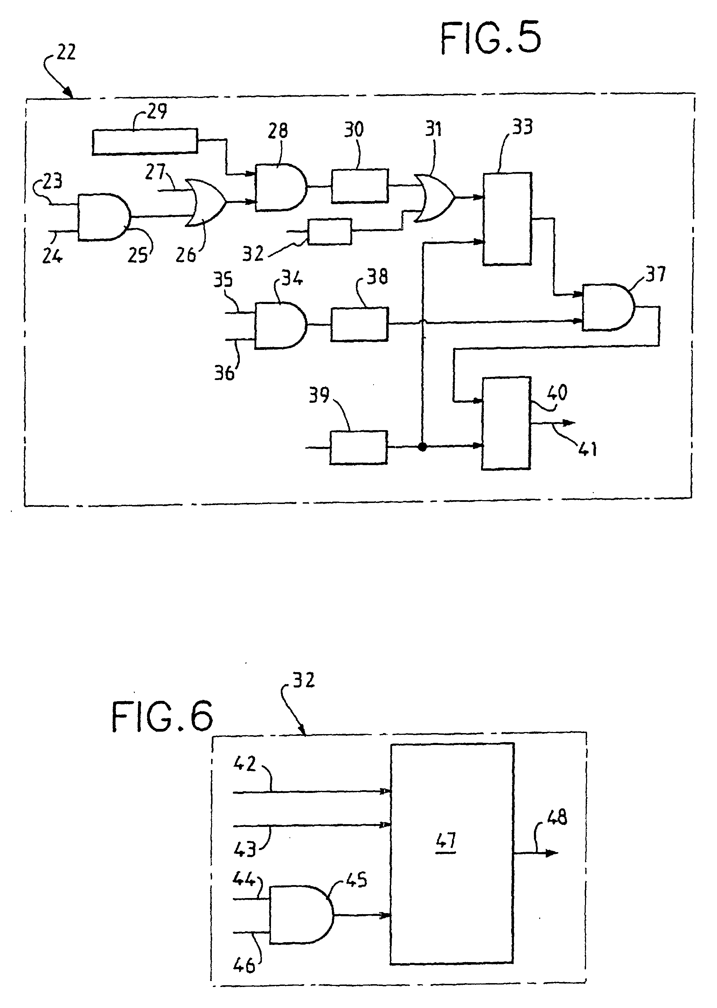

La sélection de la poussée de remise de gaz (illustrée par le circuit logique 22 de la figure 5) sera réalisée après l'achèvement de la phase de décollage.

Les critères seront basés sur le fait que :
- le moteur a fonctionné à la poussée de décollage pendant plus de 20 secondes (par exemple),
   OU
- le nombre de Mach sélectionné est supérieur à 0,35
   ET
- la manette de gaz est ramenée en arrière à MCT ou moins [et le mode dit FLEX (correspondant au fait que, pour certaines températures (chaud), on alimente le FADEC avec des paramètres de température différente de la température réelle) est désélectionné] pendant plus de 20 secondes.

Plus précisément, le circuit logique 22 illustré sur la figure 5 comporte :
- une entrée TLA = MCT 23,
- une entrée mode dit FLEX 24
reliées à une porte logique ET 25, dont la sortie est reliée à une porte logique OU 26, recevant, à son autre entrée 27, le signal TLA = MCT.
Par ailleurs, la sortie de la porte logique OU 26 est reliée à une porte logique ET 28 dont l'autre entrée reçoit, de 29, le signal correspondant au régime du moteur, dont le but est d'indiquer que le moteur est à la puissance de décollage.
Après confirmation que le moteur a fonctionné à la poussée de décollage pendant plus de 20 secondes (30), le signal correspondant est fourni à une porte logique OU 31, recevant, à son autre entrée 32, le signal du statut "vol", déterminé comme indiqué ci-après en regard de la figure 6. La sortie de la porte logique 31 est reliée au calculateur 33.
En outre, une porte logique ET 34 reçoit, comme entrées, TLA ≤ MCT 35 et mode dit FLEX 36, et sa sortie est reliée à une porte logique ET 37, après confirmation pendant 20 secondes (38), dont l'autre entrée reçoit le signal de sortie du calculateur 33, ce dernier recevant, comme seconde entrée, le signal de sortie (de 39) correspondant à la sélection de la poussée au décollage (impulsion 10 secondes), fourni également au calculateur 40, comme première entrée, et dont la seconde entrée est reliée à la sortie de la porte logique 37. La sortie 41 du calculateur 40 correspond au choix de la poussée de remise de gaz (ou plus généralement d'une phase de vol différente de la phase de décollage).

Aussitôt que la poussée de remise de gaz est sélectionnée, elle doit être verrouillée jusqu'à la sélection suivante de la poussée au décollage.

Concernant la détermination "vol" (figure 6) pour la sélection de la poussée de remise de gaz, trois sources sont disponibles :
- ADC1 Mn (> 0,35) 42,
- ADC2 Mn (> 0,35) 43,
- FADEC Mn (> 0,35) 44 ET (porte logique 45) FADEC Mn est valide (46).

Au moins deux sources reliées au calculateur 47 doivent satisfaire aux critères souhaités de façon à sélectionner la valeur "vol" (48) utilisée dans la logique de sélection de la poussée de remise de gaz.

La détermination vol/sol par ADC Mn peut se faire dans les conditions suivantes :
- pour la condition "vol" :
   . la valeur ADC doit être valide
      ET
   . Mn > 0,35
- pour la condition "sol" :
   . quand Mn de l'aéronef est inférieur à 0,1, l'indication ADC Mn est envoyée au NCD (Non Computed Data = données non calculées) avec une valeur de zéro. Cette condition sera utilisée pour déterminer que l'aéronef est au sol pourvu que la dernière bonne valeur était inférieure à 0,15.

## Revendications

1. Système de commande de moteur pour un premier aéronef appartenant à une famille d'aéronefs comportant de plus au moins un second aéronef, ledit premier aéronef présentant une masse maximale supérieure, dans une limite prédéterminée, à celle dudit second aéronef ayant, pour chaque moteur, une loi de gestion de la poussée,
**caractérisé en ce qu'**il est prévu, pour chaque moteur dudit premier aéronef (1), une première loi de gestion de la poussée dudit moteur spécifique audit premier aéronef (1) pendant la phase de décollage (T), et une seconde loi de gestion de la poussée dudit moteur correspondant à la partie de ladite loi de gestion de la poussée applicable pour ledit second aéronef pendant toutes les autres phases de vol (R), des moyens de détection (2, 22) du passage d'une phase de vol à une autre étant prévus pour fournir, audit moteur, au moins un signal de commande correspondant à l'une ou l'autre desdites première et seconde lois.

2. Système selon la revendication 1,
**caractérisé en ce que** ledit système utilise des signaux, disponibles sur ledit premier aéronef (1), traités de façon informatique.

3. Système selon la revendication 1,
**caractérisé en ce que** ledit système utilise des signaux, disponibles sur ledit premier aéronef (1), traités de façon électronique.

4. Système selon l'une quelconque des revendications 1 à 3,
**caractérisé en ce qu'**il fournit un signal "décollage" et un signal "non-décollage", chaque signal étant élaboré à partir de deux logiques et de paramètres différents.

5. Système selon la revendication 1,
**caractérisé en ce que** la sélection de la poussée au décollage par le circuit logique (2) aura lieu quand :
- la mise en puissance (3) du calculateur FADEC est effectuée,
OU (4)
- l'inverseur de poussée a été déployé (5) ET ( (6) la position de la manette des gaz (7) est inférieure à une valeur donnée,
OU
- le statut "sol" (8) est maintenu pendant un temps déterminé.

6. Système selon la revendication 5,
**caractérisé en ce que** la fin de la phase de décollage (T) est déterminée par le fait que :
- le moteur est réglé à la poussée de décollage maximale pendant un temps déterminé,
OU
- le nombre de Mach Mn > 0,35,
ET la manette de gaz est ramenée en arrière.

7. Système selon la revendication 5 ou 6,
**caractérisé en ce que** la valeur "sol" (21), utilisée dans la logique de sélection de la poussée au décollage, est sélectionnée lorsqu'au moins deux sources, parmi les quatre sources disponibles suivantes, satisfont aux critères souhaités, lesdites sources étant :
- ADC1 Mn
(12),
- ADC2 Mn
(13),
- FADEC Mn (14) ET (15) FADEC Mn est valide (16),
- LGCIU = sol (17) ET (18) LGCIU est valide (19),
où ADC désigne généralement la centrale anémométrique, FADEC un calculateur de contrôle du moteur, et LGCIU l'unité d'interface de commande du train d'atterrissage.

8. Système selon l'une quelconque des revendications 5 à 7,
**caractérisé en ce que**, après l'achèvement de la phase de décollage, la sélection de la poussée d'une autre phase de vol (R) est basée sur le fait que :
- le moteur a fonctionné à la poussée de décollage pendant un temps déterminé,
OU
- le nombre de Mach sélectionné est supérieur à 0,35
ET
- la manette de gaz est ramenée en arrière pendant un temps déterminé.

9. Système selon la revendication 8,
**caractérisé en ce que** le circuit logique (22) comporte :
- une entrée TLA = MCT (23), MCT représentant le régime maximal en continu,
- une entrée mode dit FLEX (24)
reliées à une porte logique ET (25), dont la sortie est reliée à une porte logique OU (26), recevant, à son autre entrée (27), le signal TLA = MCT, et la sortie de la porte logique OU (26) est reliée à une porte logique ET (28) dont l'autre entrée reçoit le signal correspondant au régime du moteur, et, après confirmation que le moteur a fonctionné à la poussée de décollage pendant un temps déterminé (30), le signal correspondant est fourni à une porte logique OU (31), recevant, à son autre entrée (32), le signal du statut "vol", la sortie de la porte logique (31) étant reliée à un premier calculateur (33), et une porte logique ET (34) reçoit, comme entrées, TLA ≤ MCT (35) et mode dit FLEX (36), et sa sortie est reliée à une porte logique ET (37), après confirmation pendant un temps déterminé (38), dont l'autre entrée reçoit le signal de sortie du premier calculateur (33), ce dernier recevant, comme seconde entrée, le signal de sortie correspondant à la sélection de la poussée au décollage, fourni également à un second calculateur (40), comme première entrée, et dont la seconde entrée est reliée à la sortie de la porte logique (37), la sortie (41) du second calculateur (40) correspondant au choix de la poussée d'une phase de vol (R) différente de la phase de décollage.

10. Système selon la revendication 9,
**caractérisé en ce que** la valeur "vol" est sélectionnée lorsqu'au moins deux sources, parmi les trois sources disponibles suivantes, satisfont aux critères souhaités, lesdites sources étant :
- ADC1 Mn (42),
- ADC2 Mn (43),
- FADEC Mn (44) ET ((45) FADEC Mn est valide (46).

## Patentansprüche

1. Motorsteuerungssystem für ein erstes Luftfahrzeug, das zu einer Luftfahrzeugfamilie gehört, die außerdem mindestens ein zweites Luftfahrzeug umfasst, wobei das genannte erste Luftfahrzeug eine Höchstmasse besitzt, die innerhalb eines vorher festgelegten Toleranzbereichs größer als die des genannten zweiten Luftfahrzeugs ist, das für jeden Motor ein Schubkraftsteuerungsgesetz hat, **dadurch gekennzeichnet, dass** für jeden Motor des genannten ersten Luftfahrzeugs (1) ein erstes Steuerungsgesetz für die Schubkraft, das spezifisch für den Motor des genannten ersten Luftfahrzeugs (1) in der Startphase (T) ist, und ein zweites Steuerungsgesetz für die Schubkraft des genannten Motors vorgesehen ist, das dem Teil des genannten Schubkraftsteuerungsgesetzes entspricht, der auf das genannte zweite Luftfahrzeug während aller anderen Flugphasen ( R) anwendbar ist, wobei Mittel zur Erfassung (2, 22) des Übergangs von einer Flugphase zu einer anderen vorgesehen sind, damit sie dem genannten Motor zumindest ein Steuerungssignal liefern, das dem einen oder dem anderen des genannten ersten und zweiten Gesetzes entspricht.

2. System gemäß Anspruch 1,
**dadurch gekennzeichnet, dass** das genannte System Signale verwendet, die im genannten ersten Luftfahrzeug (1) zur Verfügung stehen und mittels Datenverarbeitung verarbeitet werden.

3. System gemäß Anspruch 1,
**dadurch gekennzeichnet, dass** das genannte System Signale verwendet, die im genannten ersten Luftfahrzeug (1) zur Verfügung stehen und elektronisch verarbeitet werden.

4. System gemäß einem der Ansprüche 1 bis 3,
**dadurch gekennzeichnet, dass** es vorzugsweise ein Signal "Start" und ein Signal "kein Start" liefert, wobei jedes Signal ausgehend von zwei Logiken und verschiedenen Parametern erzeugt wird.

5. System gemäß Anspruch 1,
**dadurch gekennzeichnet, dass** die Wahl der Schubkraft beim Start durch den Logikschaltkreis (2) erfolgt, wenn
- die Einschaltung (3) des Rechners FADEC erfolgt,
ODER (4)
- die Schubkraftumkehrvorrichtung (5) ausgefahren worden ist UND (6) die Stellung des Gashebels (7) unter einem gegebenen Wert liegt,
ODER
der Status "Boden" (8) über eine bestimmte Zeit gehalten wird.

6. System gemäß Anspruch 5,
**dadurch gekennzeichnet, dass** das Ende der Startphase (T) dadurch ermittelt wird, dass
- der Motor über eine definierte Zeitspanne auf die maximale Startschubkraft eingestellt wird,
ODER
- die Machzahl Mn > 0,35 ist
UND der Gashebel zurückgezogen wird.

7. System gemäß Anspruch 5 oder 6,
**dadurch gekennzeichnet, dass** der Wert "Boden" (21), der in der Logik zur Wahl der Startschubkraft verwendet wird, gewählt wird, wenn mindestens zwei Quellen von den folgenden vier zur Verfügung stehenden Quellen die gewünschten Kriterien erfüllen, wobei es sich bei diesen Quellen um folgende handelt:
- ADC1Mn (12),
- ADC2 Mn (13),
- FADEC Mn (14) UND (15) FADEC Mn ist aktiv (16),
- LGCIU = Boden (17) UND (18) LGCIU ist aktiv (19),
wobei ADC im allgemeinen die Windmessungszentrale bezeichnet, FADEC einen Steuerungsrechner des Motors und LGCIU die Steuerschnittstelleneinheit des Fahrwerks.

8. System gemäß einem der Ansprüche 5 bis 7,
**dadurch gekennzeichnet, dass** nach Beendigung der Startphase die Wahl der Schubkraft einer anderen Flugphase (R) darauf beruht, dass
- der Motor über eine bestimmte Zeit mit der Startschubkraft gelaufen ist
ODER
- die gewählte Machzahl über 0,35 liegt
UND
- der Gashebel in einer bestimmten Zeit wieder nach hinten gezogen wird.

9. System gemäß Anspruch 8,
**dadurch gekennzeichnet, dass** der Logikkreis (22) folgendes umfasst:
- einen Eingang TLA = MCT (23), wobei MCT die maximale Dauerdrehzahl darstellt,
- einen FLEX genannten Betriebsarteneingang (24),
die beide mit einem Logikglied UND (25) verbunden sind, dessen Ausgang an ein Logikglied ODER (26) angeschlossen ist, das an seinem anderen Eingang (27) das Signal TLA = MCT erhält; und der Ausgang des Logikglieds ODER (26) ist mit einem Logikglied UND (28) verbunden, dessen anderer Eingang das Signal erhält, das der Drehzahl des Motors entspricht, und nach der Bestätigung, dass der Motor über eine bestimmte Zeitspanne (30) mit der Startschubkraft gelaufen ist, wird das entsprechende Signal zu einem ODER-Logikglied (31) geleitet, das an seinem anderen Eingang (32) das Signal des Status "Flug" erhält, wobei der Ausgang des Logikglieds (31) mit einem ersten Rechner (33) verbunden ist, und ein UND-Logikglied (34) erhält als Eingangswerte TLA ≤ MCT (35) und FLEX-Betriebsart (36)., und sein Ausgang wird nach Bestätigung in einer bestimmten Zeitspanne (38) mit einem UND-Logikglied (37) verbunden, dessen anderer Eingang das Ausgangssignal des ersten Rechners (33) erhält, der wiederum als zweiten Eingangswert das Ausgangssignal erhält, das der Wahl der Startschubkraft entspricht und ebenfalls als erster Eingangswert zu einem zweiten Rechner (40) geleitet wird, und dessen zweiter Eingang mit dem Ausgang des Logikglieds (37) verbunden ist, wobei der Ausgangswert (41) des zweiten Rechners (40) der Wahl der Schubkraft einer anderen Flugphase (R) als der Startphase entspricht.

10. System gemäß Anspruch 9,
**dadurch gekennzeichnet, dass** der Wert "Flug" gewählt wird, wenn mindestens zwei Quellen von den drei folgenden zur Verfügung stehenden Quellen die gewünschten Kriterien erfüllen,
wobei es sich bei den genannten Quellen um folgende handelt:
- ADC1 Mn (42),
- ADC2 Mn (43),
- FADEC Mn (44) UND (45) FADEC Mn ist aktiv (46).

## Claims

1. Engine control system for a first aircraft belonging to a family of aircraft which furthermore includes at least a second aircraft, the said first aircraft having a maximum mass which is greater, within a predetermined limit, than that of the said second aircraft, which has a thrust management law for each engine, **characterized in that** for each engine of the said first aircraft (1), a first management law for the thrust of the said engine, specific to the said first aircraft (1) during the take-off phase (T), and a second management law for the thrust of the said engine, corresponding to the part of the said thrust management law applicable to the said second aircraft during all the other flight phases (R), are provided, means (2, 22) for detecting the transition from one flight phase to another being provided in order to supply the said engine with at least one control signal corresponding to one or other of the said first and second laws.

2. System according to Claim 1, **characterized in that** the said system uses computer-processed signals available from the said first aircraft (1).

3. System according to Claim 1, **characterized in that** the said system uses electronically processed signals available from the said first aircraft (1).

4. System according to any of Claims 1 to 3, **characterized in that** it supplies a "take-off" signal and a "not take-off" signal, each signal being formed on the basis of two logics and parameters which are different.

5. System according to Claim 1, **characterized in that** the logic circuit (2) will select the take-off thrust when:
- the FADEC computer is powered up (3),
OR (4)
- the thrust reverser has been deployed (5) AND (6) the throttle lever angle (7) is less than a given value,
OR
- the "ground" status (8) is maintained for a determined time.

6. System according to Claim 5, **characterized in that** the end of the take-off phase (T) is determined by the fact that:
- the engine is set to the maximum take-off thrust for a determined time,
OR
- the Mach number Mn > 0.35,
AND the throttle lever is pulled back.

7. System according to Claim 5 or 6, **characterized in that** the "ground" value (21) used in the take-off thrust selection logic is selected when at least two sources among the following four available sources meet the desired criteria, the said sources being:
- ADC1 Mn (12),
- ADC2 Mn (13),
- FADEC Mn (14) AND (15) FADEC Mn is valid (16),
- LGCIU = ground (17) AND (18) LGCIU is valid (19),
where ADC generally denotes the air data computer, FADEC an engine control computer, and LGCIU the landing gear control interface unit.

8. System according to any of Claims 5 to 7, **characterized in that**, after the take-off phase has been completed, the thrust selection for another flight phase (R) is based on the fact that:
- the engine has operated at the take-off thrust for a determined time,
OR
- the selected Mach number is greater than 0.35
AND
- the throttle lever is pulled back for a determined time.

9. System according to Claim 8, **characterized in that** the logic circuit (22) includes:
- a TLA = MCT input (23), MCT representing the maximum continuous speed,
- a so-called FLEX mode input (24)
which are connected to an AND logic gate (25) whose output is connected to an OR logic gate (26) which, at its other input (27), receives the TLA = MCT signal, and the output of the OR logic gate (26) is connected to an AND logic gate (28) whose other input receives the signal corresponding to the engine speed, and, after confirmation that the engine has operated at the take-off thrust for a determined time (30), the corresponding signal is supplied to an OR logic gate (31) which, at its other input (32), receives the "flight" status signal, the output of the logic gate (31) being connected to a first computer (33), and an AND logic gate (34) receives TLA ≤ MCT (35) and so-called FLEX mode (36) as inputs, and its output is connected to an AND logic gate (37), after confirmation for a determined time (38), whose other input receives the output signal of the first computer (33), the latter receiving as second input the output signal corresponding to the take-off thrust selection, also supplied as first input to a second computer (40) whose second input is connected to the output of the logic gate (37), the output (41) of the second computer (40) corresponding to the thrust choice for a flight phase (R) other than the take-off phase.

10. System according to Claim 9, **characterized in that** the "flight" value is selected when at least two sources of the following three available sources meet the desired criteria, the said sources being:
- ADC1 Mn (42),
- ADC2 Mn (43),
- FADEC Mn (44) AND (45) FADEC Mn is valid (46).
